# EUROPEAN PATENT APPLICATION

(11) **EP 4 830 961 A1**
(43) Date of publication of application: **28.10.2026**
(21) Application number: 26166546.7
(22) Date of filing: 20.03.2026
(51) Int. Cl.: B60K 1/04

(54) **VEHICLE LOWER PORTION STRUCTURE**

(30) Priority: 21.04.2025 JP 2025069904
(71) Applicant: Toyota Jidosha Kabushiki Kaisha, Toyota-shi, Aichi-ken 471-8571 (JP)
(72) Inventor: HIGASHIHARA, Katsunori, TOYOTA-SHI, AICHI-KEN, 471-8571 (JP)
(74) Representative: Cabinet Beau de Loménie

(57) **Abstract**

A vehicle lower portion structure (10) comprises a battery pack (20) disposed at a vehicle lower portion (18), onboard equipment (50, 54, 56) disposed at a vehicle upper side of the battery pack (20), a cover (58) that covers the onboard equipment (50, 54, 56) from a vehicle upper side, the cover (58) directly or indirectly supporting, from a vehicle lower side, a seat cushion (60) at which a vehicle occupant can be seated, a framework portion (38, 42) disposed at a vehicle width direction outer side relative to the cover (58), the framework portion (38, 42) configuring a framework of a vehicle side portion (15), and a load-transmitting wall portion (70, 92, 94, 96, 102) that is provided extending from a vehicle width direction outer side of an upper wall portion (58A) of the cover (58) to the framework portion (38, 42).

## Description

### BACKGROUND

### Technical Field

The present disclosure relates to a vehicle lower portion structure.

### Related Art

A technology relating to a lower portion structure of a vehicle rear portion is disclosed in, for example, Japanese Patent Application Laid-Open (JP-A) No. 2020-001451. In this conventional technology, a battery pack is disposed at a lower side of a floor panel of a vehicle cabin. The battery pack is fixed to frame members that include chamber portions-such as floor frames extending in a vehicle front-and-rear direction, cross-members extending in a vehicle width direction, and the like-to be mounted in the vehicle.

During a small overlap collision (below referred to by the abbreviation "SOL"), a side face collision (below referred to as a "side impact") or the like of the vehicle, a load due to inertia from the legs of a vehicle occupant sitting on a vehicle seat is applied to a case (below referred to as a "cover") of the battery pack that is disposed at the lower side of the vehicle seat.

A large load that is applied to the cover in an initial period of a collision is received by the battery pack disposed at the lower side of the floor panel. As a result, the battery pack may be damaged.

The present disclosure provides a vehicle lower portion structure that may suppress damage to a battery pack during a SOL or side impact of a vehicle.

### SUMMARY

A vehicle lower portion structure according to a first aspect includes: a battery pack disposed at a vehicle lower portion; onboard equipment disposed at a vehicle upper side of the battery pack; a cover that covers the onboard equipment from a vehicle upper side, the cover directly or indirectly supporting, from a vehicle lower side, a seat cushion at which a vehicle occupant can be seated; a framework portion disposed at a vehicle width direction outer side relative to the cover, the framework portion configuring a framework of a vehicle side portion; and a load-transmitting wall portion that is provided extending from a vehicle width direction outer side of an upper wall portion of the cover to the framework portion.

In the vehicle lower portion structure according to the first aspect, the battery pack, the onboard equipment, the cover, the framework portion and the load-transmitting wall portion are provided. The battery pack is disposed in the vehicle lower portion. The onboard equipment is disposed at a vehicle upper side of the battery pack. The cover covers the onboard equipment from a vehicle upper side thereof, and the cover supports, from a vehicle lower side, the seat cushion at which a vehicle occupant can be seated, directly or indirectly. The framework portion is disposed at a vehicle width direction outer side relative to the cover and structures the vehicle side portion framework. The load-transmitting wall portion is provided to extend from a vehicle width direction outer side of the upper wall portion of the cover to the framework portion.

Thus, because the load-transmitting wall portion is provided to extend from a vehicle width direction outer side of the upper wall portion of the cover to the framework portion provided at a vehicle side portion, the upper wall portion of the cover and the framework portion of the vehicle side portion are connected in a vehicle width direction via the load-transmitting wall portion. Therefore, in the present aspect a load transmission path is formed that transmits a load in a vehicle width direction from the cover to the framework portion of the vehicle side portion via the load-transmitting wall portion.

Therefore, during a SOL or side impact of the vehicle according to the present aspect, a large load that is applied due to inertia from the legs of a vehicle occupant to the side thereof at which the cover is disposed is transmitted in a vehicle width direction through the load-transmitting wall portion toward the framework portion of the vehicle side portion. Thus, in the present aspect, transmission of a large load to the battery pack may be suppressed and damage to the battery pack may be suppressed.

Loads may be transmitted by the load-transmitting wall portion at times other than a SOL or side impact of the vehicle. Accordingly, in the descriptions below a load is described simply as "the load", regardless of the magnitude of an acceleration.

The meaning of the term "the cover directly or indirectly supporting a seat cushion --- from a vehicle lower side" in the present aspect is intended to encompass, in addition to structures in which the cover supports the seat cushion from the vehicle lower side in a state in which the cover is in direct contact with (abuts) the seat cushion, structures in which the cover supports the seat cushion from the vehicle lower side in a state in which an interposed member such as a thermal insulation member or the like is provided between the seat cushion and the cover.

In a vehicle lower portion structure according to a second aspect, in the vehicle lower portion structure according to the first aspect, the load-transmitting wall portion is connected to a connection portion of the framework portion, the connection portion being provided at a vehicle upper side relative to an upper face of the battery pack and at the vehicle lower side relative to an upper face of the cover.

In the vehicle lower portion structure according to the second aspect, the load-transmitting wall portion is connected to the connection portion provided at the framework portion. The connection portion is provided at the vehicle upper side relative to the upper face (upper wall portion) of the battery pack but at the vehicle lower side relative to the upper face of the cover. That is, the connection portion provided at the framework portion is provided between the upper face of the cover and the upper face of the battery pack in the vehicle vertical direction. Thus, a load transmitted from the cover through the load-transmitting wall portion is transmitted to the framework portion via the connection portion, which is provided at the vehicle upper side relative to the upper face of the battery pack.

In the present aspect, because the connection portion is provided at the vehicle upper side relative to the upper face of the battery pack, a difference in the vehicle vertical direction between the upper face of the cover and the connection portion may be reduced. As a result, a load applied to the cover may be transmitted to the framework portion earlier.

In a vehicle lower portion structure according to a third aspect, in the vehicle lower portion structure according to the first aspect or the second aspect, the seat cushion abuts the upper wall portion of the cover.

In the vehicle lower portion structure according to the third aspect, because the seat cushion is abutted against the upper wall portion of the cover, space in a luggage compartment may be greater than in a structure in which a gap is provided between a seat cushion and a cover. In the present aspect, the cover supports the seat cushion from the vehicle lower side thereof in the state in which the cover is abutted against the seat cushion.

In a vehicle lower portion structure according to a fourth aspect, in the vehicle lower portion structure according to any one of the first to third aspects, the load-transmitting wall portion is molded integrally with the cover.

In the vehicle lower portion structure according to the fourth aspect, because the load-transmitting wall portion and the cover are integrally molded, a number of components may be decreased and component costs may be reduced.

In a vehicle lower portion structure according to a fifth aspect, in the vehicle lower portion structure according to any one of the first to fourth aspects, the load-transmitting wall portion is a first bracket, and the upper wall portion of the cover is connected to the framework portion via the first bracket.

In the vehicle lower portion structure according to the fifth aspect, the load-transmitting wall portion is formed as the first bracket. In the present aspect, the load-transmitting wall portion is the first bracket that is a separate body from the cover, and the upper wall portion of the cover is connected to the framework portion via the first bracket.

Thus, because the load-transmitting wall portion is provided separately from the cover, the load-transmitting wall portion is not subject to constraints from the shape of the cover, and freedom of design of the first bracket constituting the load transmission path is improved. As a result in the present aspect, a load applied to the cover from the legs of a vehicle occupant may be transmitted toward the framework portion more effectively.

In a vehicle lower portion structure according to a sixth aspect, in the vehicle lower portion structure according to the fifth aspect, a position of connection of the first bracket to the cover is at a side of the first bracket at which a front end portion of the seat cushion is disposed.

In the vehicle lower portion structure according to the sixth aspect, the position of connection of the cover at the first bracket is set to the side of the first bracket at which the front end portion of the seat cushion is disposed. Thus, a point at which a load applied from the seat cushion is large may be reinforced. Therefore in the present aspect, a load applied from the legs of a vehicle occupant may be transmitted to the framework portion via the first bracket effectively, and application of a load to the battery pack may be suppressed effectively.

In a vehicle lower portion structure according to a seventh aspect, in the vehicle lower portion structure according to the fifth aspect or the sixth aspect, a fixing face is provided at a position of connection of the first bracket to the framework portion, the fixing face receiving a load from the cover.

In the vehicle lower portion structure according to the seventh aspect, the fixing face that braces a load on the cover is provided at the position of connection of the first bracket to the framework portion. Thus, a load applied to the side at which the cover is disposed may be transmitted to the side at which the framework portion is disposed via the fixing face efficiently.

In a vehicle lower portion structure according to an eighth aspect, in the vehicle lower portion structure according to any one of the first to seventh aspects, a reinforcing member that extends in the vehicle width direction is provided at a lower face side of the upper wall portion of the cover.

In the vehicle lower portion structure according to the eighth aspect, the reinforcing member that extends in the vehicle width direction is provided at the lower face side of the upper wall portion of the cover, and the cover is reinforced by the reinforcing member. As a result in the present aspect, bending deformations of the cover in the vehicle width direction and the vehicle vertical direction may be suppressed.

In a vehicle lower portion structure according to a ninth aspect, in the vehicle lower portion structure according to the eighth aspect, the reinforcing member is connected to the framework portion.

In the vehicle lower portion structure according to the ninth aspect, because the reinforcing member is connected to the framework portion, a load that is applied to the side at which the cover is disposed may be transmitted to the framework portion via the reinforcing member. That is, in the present aspect a load transmission path may also be formed by the reinforcing member. Thus, a load applied to the side at which the cover is disposed may be dispersed, and transmission of a large load to the battery pack may be suppressed.

In a vehicle lower portion structure according to a tenth aspect, in the vehicle lower portion structure according to the eighth aspect or the ninth aspect, the reinforcing member is connected to the framework portion via a second bracket, the second bracket configuring the load-transmitting wall portion.

In the vehicle lower portion structure according to the tenth aspect, because the reinforcing member is connected to the framework portion via the second bracket that structures the load-transmitting wall portion, a load transmitted through the reinforcing member may be transmitted to the framework portion via the second bracket. Note that the second bracket may also be employed as the first bracket.

In a vehicle lower portion structure according to an eleventh aspect, in the vehicle lower portion structure according to any one of the first to tenth aspects, a thermal insulation member is provided between the seat cushion and the cover.

In the vehicle lower portion structure according to the eleventh aspect, because the thermal insulation member is provided between the seat cushion and the cover, transmission of heat from the onboard equipment through to the seat cushion may be suppressed. In the present aspect, in the state in which the thermal insulation member is provided between the seat cushion and the cover, the cover supports the seat cushion from the vehicle lower side via the thermal insulation member.

In a vehicle lower portion structure according to a twelfth aspect, in the vehicle lower portion structure according to any one of the first to eleventh aspects, the cover is formed of a member that blocks electromagnetic waves.

In the vehicle lower portion structure according to the twelfth aspect, because the cover is formed of the member that blocks electromagnetic waves, propagation of electromagnetic waves from onboard equipment through to a luggage compartment may be suppressed.

As described above, in a vehicle lower portion structure according to the present disclosure, damage to a battery pack during a SOL or side impact of a vehicle may be suppressed.

### BRIEF DESCRIPTION OF THE DRAWINGS

An exemplary embodiment of the present invention will be described in detail based on the following figures, wherein:
Fig. 1 is a perspective view showing a state in which part of a rear seat of a vehicle in which a vehicle lower portion structure according to the present exemplary embodiment is employed is cut away and principal portions are depicted;
Fig. 2 is a sectional diagram showing a vehicle left side cut along line A-A in Fig. 1;
Fig. 3 is a sectional diagram in which a connection structure of a load-transmitting wall portion that structures the vehicle lower portion structure according to the present exemplary embodiment is seen diagonally from the upper side of the front-left side;
Fig. 4 is a sectional diagram cut along line B-B shown in Fig. 3;
Fig. 5 is a sectional diagram in which a rear portion of a vehicle in which the vehicle lower portion structure according to the present exemplary embodiment is employed is cut in the vehicle front-and-rear direction and the vehicle vertical direction;
Fig. 6 is a sectional diagram showing a first exemplary embodiment of the load-transmitting wall portion that structures the vehicle lower portion structure according to the present exemplary embodiment;
Fig. 7 is a sectional diagram in which a second exemplary embodiment of the load-transmitting wall portion that structures the vehicle lower portion structure according to the present exemplary embodiment is cut in the vehicle front-and-rear direction and the vehicle vertical direction;
Fig. 8 is a schematic diagram showing the connection structure of the load-transmitting wall portion that structures the vehicle lower portion according to the present exemplary embodiment;
Fig. 9 is a schematic diagram, corresponding to Fig. 8, showing a third exemplary embodiment of the load-transmitting wall portion that structures the vehicle lower portion structure according to the present exemplary embodiment;
Fig. 10 is a schematic diagram, corresponding to Fig. 8, showing a fourth exemplary embodiment of the load-transmitting wall portion that structures the vehicle lower portion structure according to the present exemplary embodiment;
Fig. 11 is a schematic diagram, corresponding to Fig. 8, showing a fifth exemplary embodiment of the load-transmitting wall portion that structures the vehicle lower portion structure according to the present exemplary embodiment;
Fig. 12 is a schematic diagram, corresponding to Fig. 8, showing a sixth exemplary embodiment of the load-transmitting wall portion that structures the vehicle lower portion structure according to the present exemplary embodiment;
Fig. 13 is a schematic diagram, corresponding to Fig. 8, showing a seventh exemplary embodiment of the load-transmitting wall portion that structures the vehicle lower portion structure according to the present exemplary embodiment; and
Fig. 14 is a schematic diagram, corresponding to Fig. 8, showing an eighth exemplary embodiment of the load-transmitting wall portion that structures the vehicle lower portion structure according to the present exemplary embodiment.

### DETAILED DESCRIPTION

A vehicle lower portion structure according to an exemplary embodiment of the present disclosure is described. The arrow FR that is shown where appropriate in the drawings indicates a vehicle front-and-rear direction front side, the arrow RH indicates a vehicle right side, and the arrow UP indicates a vehicle vertical direction upper side. Below, where descriptions are given simply using directions to front and rear, left and right, and upper and lower, unless particularly specified, these refer to front and rear in the vehicle front-and-rear direction, left and right in the vehicle left-and-right direction (the vehicle width direction), and upper and lower in the vehicle vertical direction.

### = Structures of the Vehicle Lower Portion Structure =

First, structures of the vehicle lower portion structure according to the present exemplary embodiment are described.

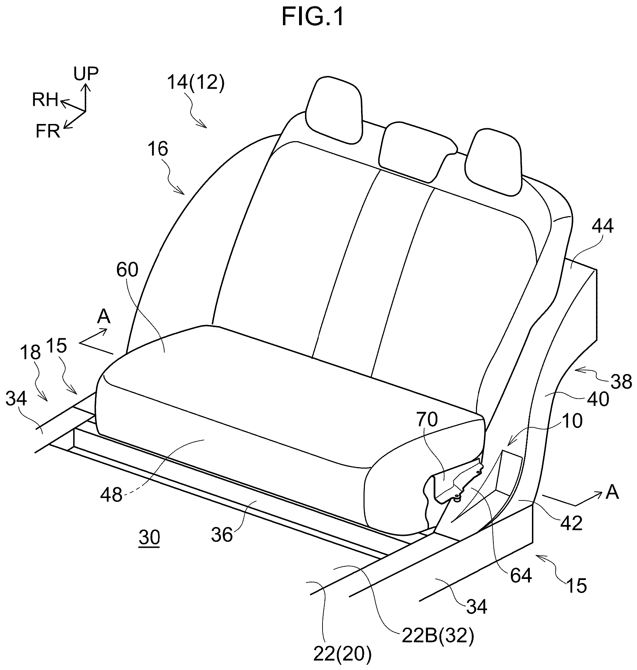

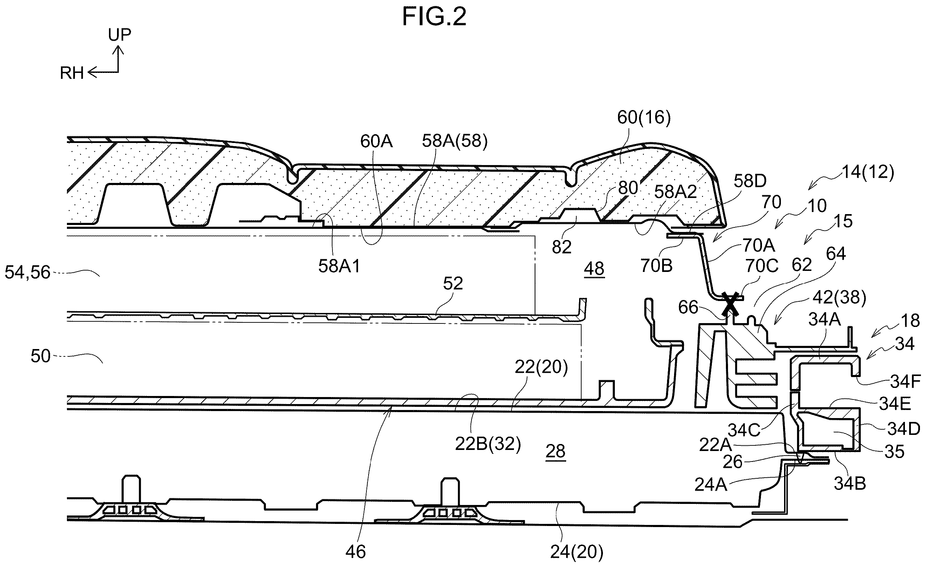

Fig. 1 is a perspective view of a rear portion (a vehicle rear portion 14) side of a vehicle 12 in which a vehicle lower portion structure 10 according to the present exemplary embodiment is employed. In Fig. 1, the rear portion side of the vehicle 12 is seen diagonally from the upper side of the front-left side, in a state in which part of the left side of a rear seat 16 is cut away and principal portions of the present exemplary embodiment are visible. Fig. 2 is a sectional diagram showing the left side of the vehicle 12 cut along line A-A shown in Fig. 1.

As shown in Fig. 1 and Fig. 2, in the present exemplary embodiment a battery pack 20 is disposed in a vehicle lower portion 18. The battery pack 20 includes an upper case 22 and a lower case 24. The upper case 22 and lower case 24 are respectively formed substantially in box shapes. Flange portions 22A and 24A project from outer edges of, respectively, the upper case 22 and the lower case 24. The flange portion 22A and the flange portion 24A are superposed in the vehicle vertical direction, and in this state are joined via an adhesive 26 or the like. Plural battery cells (which are not shown in the drawings) are accommodated in an accommodation portion 28 formed by the upper case 22 and lower case 24. In the present exemplary embodiment, a floor portion 32 of a cabin interior 30 is structured by an upper face 22B of the upper case 22.

A left and right pair of rockers 34 are provided at both vehicle width direction outer sides of the battery pack 20. The rockers 34 extend in the vehicle front-and-rear direction. At the floor portion 32, cross-members 36 extend in the vehicle width direction between the left and right pair of rockers 34. A plural number of the cross members 36 are provided in the vehicle front-and-rear direction.

A cross-sectional shape of each rocker 34 cut in the vehicle width direction and the vehicle vertical direction is a chamber formed in a substantially rectangular shape whose longer direction is in the vehicle vertical direction. The rocker 34 includes an upper wall portion 34A, a lower wall portion 34B, an inner wall portion 34C and an outer wall portion 34D. The upper wall portion 34A structures an upper end portion of the rocker 34. The lower wall portion 34B structures a lower end portion of the rocker 34. The inner wall portion 34C links the vehicle width direction inner end of the upper wall portion 34A with the vehicle width direction inner end of the lower wall portion 34B. The outer wall portion 34D links the vehicle width direction outer end of the upper wall portion 34A with the vehicle width direction outer end of the lower wall portion 34B. A partition wall 34E is provided at a substantially central portion in the vehicle vertical direction of the rocker 34. The partition wall 34E partitions the interior of the rocker 34 into upper and lower partitions.

In Fig. 2, A hole portion 34F is formed in each rocker 34. A fastening bolt for fastening to another member may be inserted through the hole portion 34F. Therefore, a portion of the rocker 34 has an open chamber shape at the location where the hole portion 34F is formed. A chamber portion 35 is formed by the upper wall portion 34A, lower wall portion 34B, inner wall portion 34C and outer wall portion 34D and is divided by the partition wall 34E. One or other of the upper side and lower side of the chamber portion 35 is formed as a chamber, assuring stiffness of the rocker 34.

In the present exemplary embodiment, the battery pack 20 is supported at the lower wall portion 34B of each rocker 34, and the upper case 22 side of the battery pack 20 is superposed with the rocker 34 in a vehicle side view.

In the present exemplary embodiment, a rear module (framework portion) 38 is provided at the rear side of the rockers 34. The rear module 38 includes a left and right pair of wheel houses 40, a left and right pair of joining portions (framework portions) 42 and a support member 44. The rear module 38 is integrally molded by die casting of a material such as an aluminum alloy, a magnesium alloy or the like.

The wheel houses 40 are disposed at the vehicle width direction outer sides and may accommodate vehicle wheels (which are not shown in the drawings). The left and right wheel houses 40 are linked in the vehicle width direction by the support member 44. The joining portions 42 are provided at the front sides of the wheel houses 40. That is, the left and right pair of joining portions 42 structure frameworks of vehicle side portions 15 according to the present exemplary embodiment. Each of the left and right pair of joining portions 42 extends in the vehicle front-and-rear direction, is formed in a shape that may be abutted against the upper wall portion 34A and inner wall portion 34C of the rocker 34, and is joined to a respective rear end portion of the rocker 34.

In the present exemplary embodiment, an equipment case 46 is provided at the vehicle rear portion 14 at a vehicle upper side of the battery pack 20. The equipment case 46 is disposed on the upper side of the battery pack 20. In a vehicle plan view, the equipment case 46 is accommodated within a cavity 48 encircled by the cross-members 36, the joining portions 42 configuring the vehicle side portions 15 of the rear module 38, and the support member 44.

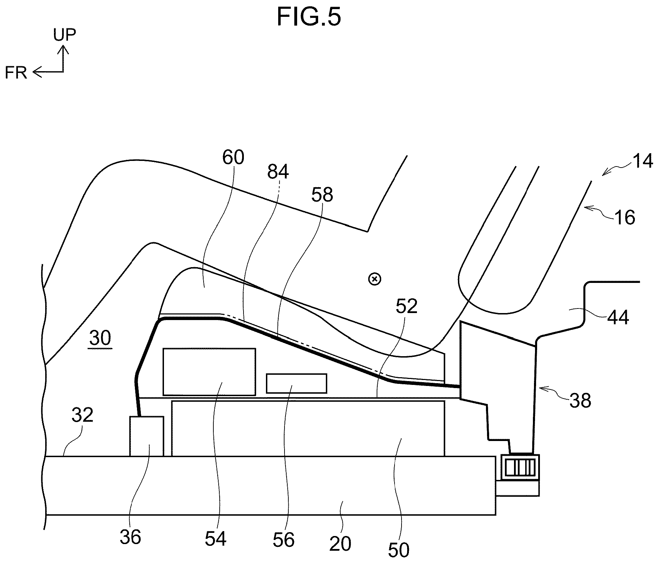

The equipment case 46 is formed in a box shape. Onboard equipment 50 is provided inside the equipment case 46. A board-shaped platform 52 is provided at an open end of the equipment case 46. Pieces of onboard equipment 54 and 56 (see Fig. 5) are provided at the upper side of the platform 52. Fig. 5 is a sectional diagram in which the vehicle rear portion 14 is cut in the vehicle front-and-rear direction and the vehicle vertical direction. Hatching to indicate a section plane is not marked in Fig. 5.

These pieces of onboard equipment 50, 54 and 56 are covered by an auxiliary equipment cover (a cover) 58. The onboard equipment includes plural pieces of auxiliary equipment. The onboard equipment includes, for example, an electronic control unit (ECU), a charger, an inverter and a DC-DC converter, in addition to battery cells.

In the present exemplary embodiment, the auxiliary equipment cover 58 is formed of an iron material, is provided at the vehicle upper side of the battery pack 20, and supports a seat cushion 60 of the rear seat 16 from a vehicle lower side. As shown in Fig. 2 to Fig. 4, the auxiliary equipment cover 58 includes an upper wall portion 58A, a front wall portion 58B, and a left and right pair of side wall portions 58C. The upper wall portion 58A supports the seat cushion 60. The front wall portion 58B descends to the vehicle lower side from the front end of the upper wall portion 58A. The side wall portions 58C respectively descend to the vehicle lower side from two vehicle width direction side ends 59 of the upper wall portion 58A.

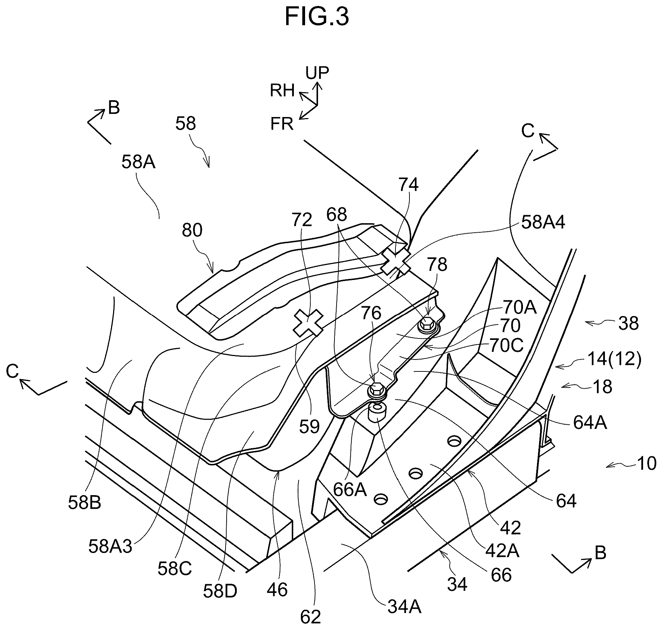

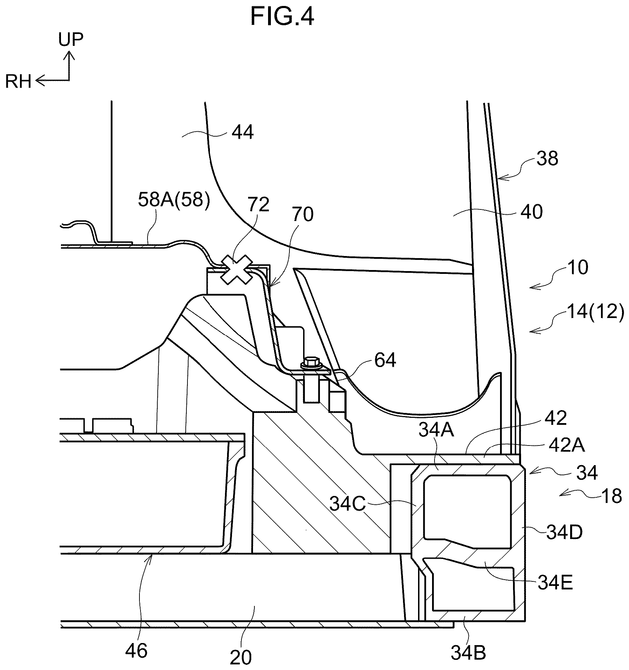

Fig. 3 shows a perspective view in which principal portions of the present exemplary embodiment are seen diagonally from the upper side of the front-left side. Fig. 4 is a sectional diagram cut along line B-B shown in Fig. 3. The seat cushion 60 (see Fig. 2) is not shown in the drawings of Fig. 3 and Fig. 4.

In the present exemplary embodiment, respective flange portions 58D project from the lower ends of the left and right pair of side wall portions 58C. The flange portions 58D project to the respective vehicle width direction outer sides. The upper wall portion 58A of the auxiliary equipment cover 58 abuts a lower face 60A of the seat cushion 60. In a vehicle side view, the upper wall portion 58A slopes to the vehicle lower side from the vehicle front side toward the vehicle rear side, so as to match a slope of the seat cushion 60. Accordingly, lengths of the left and right pair of side wall portions 58C steadily decrease towards the vehicle rear side. Thus, the flange portions 58D may project from the side ends 59 of the upper wall portion 58A at a rear portion side of the upper wall portion 58A of the auxiliary equipment cover 58.

In the present exemplary embodiment, in a vehicle plan view, gaps 62 are provided between the side wall portions 58C (more strictly, the flange portions 58D) of the auxiliary equipment cover 58 and the rockers 34. As mentioned above, each joining portion 42 configuring the vehicle side portions 15 of the rear module 38 is formed in a shape that is abuttable against the upper wall portion 34A and inner wall portion 34C of the rocker 34.

A connection portion 64 is provided at the vehicle width direction inner side of the joining portion 42. A bracket 70 (a first bracket or load-transmitting wall portion), which is described below, is connected to the connection portion 64. The connection portion 64 is disposed in the gap 62 provided between the side wall portion 58C of the auxiliary equipment cover 58 and the rocker 34. A fastening portion 42A is fastened to the upper wall portion 34A of the rocker 34. The connection portion 64 provided at the joining portions 42 protrudes to the vehicle upper side relative to the fastening portion 42A. The connection portion 64 is disposed along the vehicle vertical direction between the upper wall portion 58A of the auxiliary equipment cover 58 and the upper wall portion 34A of the rocker 34.

The connection portion 64 includes an inclined surface 64A that slopes to the vehicle upper side toward the vehicle rear side. Plural bosses 66 (a fixing face) are provided standing in the vehicle vertical direction from the inclined surface 64A. Fastening bolts 68 may be fastened at the bosses 66. In the present exemplary embodiment, an upper face 66A of each boss 66 serves as the fixing face. The upper face 66A of the boss 66 is provided at the vehicle upper side relative to the upper face 22B of the upper case 22 of the battery pack 20 and at the vehicle lower side relative to an upper face 58A1 of the upper wall portion 58A of the auxiliary equipment cover 58.

The corresponding bracket 70, which is fabricated of metal, is disposed between the side wall portion 58C of the auxiliary equipment cover 58 and the joining portion 42 (the vehicle side portion 15) of the rear module 38. A cross-sectional shape of the bracket 70 cut in the vehicle width direction and the vehicle vertical direction is formed substantially in a letter-Z shape. The bracket 70 includes a main body portion 70A, which is provided at a central portion in a length direction of the bracket 70, and joining pieces 70B and 70C, which are provided at the two end portions in the length direction of the bracket 70.

The main body portion 70A of the bracket 70 is arranged along the vehicle vertical direction and the vehicle front-and-rear direction. In the present exemplary embodiment, the joining piece 70B is an upper end portion of the bracket 70 and is arranged along the vehicle width direction and the vehicle front-and-rear direction. The joining piece 70C is a lower end portion of the bracket 70 and is also arranged along the vehicle width direction and the vehicle front-and-rear direction.

The joining piece 70B of the bracket 70 is welded to a lower face 58A2 side of the upper wall portion 58A of the auxiliary equipment cover 58, at least at a side at which a front end portion 58A3 is formed and a side at which a rear end portion 58A4 is formed (at weld portions 72 and 74). The joining piece 70C of the bracket 70 is fastened to the bosses 66 provided at the connection portion 64 of the rear module 38 via the fastening bolts 68 (at fastening portions 76 and 78).

That is, positions of connection of the bracket 70 to the auxiliary equipment cover 58 are the weld portions 72 and 74, and positions of connection of the bracket 70 to the rear module 38 are the fastening portions 76 and 78. Although the joining piece 70B and the upper wall portion 58A of the auxiliary equipment cover 58 are joined by welding, the same may of course be joined by bolt-fastening. That is, in the present exemplary embodiment it is sufficient that the joining piece 70B and upper wall portion 58A are connected (joined). Therefore, a joining method is not particularly limited.

In the present exemplary embodiment, the pair of the weld portion 72 and fastening portion 76 and the pair of the weld portion 74 and fastening portion 78 are disposed on respective substantially straight lines in the vehicle width direction.

In the present exemplary embodiment, a plate-shaped reinforcement 80 that extends in the vehicle front-and-rear direction is provided at the vehicle width direction inner side relative to the bracket 70, at the upper face 58A1 side of the upper wall portion 58A of the auxiliary equipment cover 58. A cross-sectional shape of the reinforcement 80 cut in the vehicle width direction and the vehicle vertical direction is formed substantially as a hat shape whose vehicle lower side is open. A chamber portion 82 is formed between the reinforcement 80 and the upper face 58A1 of the upper wall portion 58A of the auxiliary equipment cover 58.

### = Operation and Effects of the Vehicle Lower Portion Structure =

Now, operation and effects of the vehicle lower portion structure according to the present exemplary embodiment are described.

As shown in Fig. 2 to Fig. 4, the present exemplary embodiment is provided with the battery pack 20, the onboard equipment 50, the auxiliary equipment cover 58, the vehicle side portions 15 serving as the framework portion, and each bracket 70 serving as the load-transmitting wall portion.

The battery pack 20 is disposed at the vehicle lower portion 18, and the onboard equipment 50 is disposed at the vehicle upper side of the battery pack 20. The auxiliary equipment cover 58 covers the onboard equipment 50 from the vehicle upper side, and supports the seat cushion 60 on which a vehicle occupant may sit from the vehicle lower side. The connection portion 64 provided at the joining portion 42 that structures the vehicle side portion 15 of the rear module 38 is disposed at the vehicle width direction outer side relative to the auxiliary equipment cover 58. The bracket 70 is provided extending from a vehicle width direction outer side of the upper wall portion 58A of the auxiliary equipment cover 58 to the connection portion 64.

Described more specifically, in the present exemplary embodiment the auxiliary equipment cover 58 is structured with the upper wall portion 58A that supports the seat cushion 60 and the left and right pair of side wall portions 58C that respectively descend to the vehicle lower side from the two vehicle width direction ends of the upper wall portion 58A.

The fixing face (the upper faces 66A of the bosses 66) is provided at the connection portion 64 configuring the vehicle side portion 15 of the rear module 38. The fixing face is formed by the bosses 66 that are provided standing in the vehicle vertical direction from the inclined surface 64A that structures the upper face of the connection portion 64. The fastening bolts 68 may be fastened to the bosses 66. Each upper face 66A of the bosses 66 is provided at the vehicle upper side relative to the upper face 22B of the upper case 22 of the battery pack 20 and at the vehicle lower side relative to the upper face 58A1 of the upper wall portion 58A of the auxiliary equipment cover 58.

In the present exemplary embodiment, the joining piece 70B of the bracket 70 is welded to the upper wall portion 58A of the auxiliary equipment cover 58, and the joining piece 70C is fastened to the connection portion 64 of the rear module 38.

Thus, in the present exemplary embodiment, the upper wall portion 58A of the auxiliary equipment cover 58 and the connection portion 64 of the rear module 38 are connected via the bracket 70, Thus, a load transmission path is formed that transmits a load in the vehicle width direction from the upper wall portion 58A of the auxiliary equipment cover 58 to the connection portion 64 of the rear module 38 via the bracket 70.

As a comparative example, in a structure that is not provided with the bracket 70, no load transmission path is formed linking the auxiliary equipment cover 58 with the rear module 38. Consequently, a load applied to the side at which the auxiliary equipment cover 58 is disposed may be transmitted to the side at which the battery pack 20 is disposed.

In contrast, the present exemplary embodiment is provided with the bracket 70 and the load transmission path is formed between the auxiliary equipment cover 58 and the rear module 38 via the bracket 70. Therefore, during a SOL or side impact of the vehicle 12 according to the present exemplary embodiment, a load that is applied due to inertia from the legs of a vehicle occupant to the side thereof at which the auxiliary equipment cover 58 is disposed is transmitted in the vehicle width direction through the bracket 70 toward the connection portion 64 of the rear module 38. Thus, in the present exemplary embodiment, transmission of a load to the battery pack 20 may be suppressed and damage to the battery pack 20 may be suppressed.

As described above, the bracket 70 according to the present exemplary embodiment is provided at the vehicle upper side relative to the upper face 22B of the battery pack 20 but at the vehicle lower side relative to the upper face 58A1 of the auxiliary equipment cover 58. The joining piece 70B of the bracket 70 is connected to the lower face 58A2 side of the upper wall portion 58A of the auxiliary equipment cover 58, and the joining piece 70C of the bracket 70 is connected to the connection portion 64 of the rear module 38.

In the present exemplary embodiment, because the connection portion 64 of the vehicle side portion 15 is provided at the vehicle upper side relative to the upper face 22B of the battery pack 20, a difference in the vehicle vertical direction between the upper wall portion 58A of the auxiliary equipment cover 58 and the connection portion 64 of the rear module 38 may be reduced. As a result, in the present exemplary embodiment a load applied to the auxiliary equipment cover 58 may be transmitted to the vehicle side portion 15 earlier.

In the present exemplary embodiment, the auxiliary equipment cover 58 and the rear module 38 are connected via the bracket 70. That is, in the present exemplary embodiment, the load-transmitting wall portion is the bracket 70 that is a separate body from the auxiliary equipment cover 58.

Thus, because the load-transmitting wall portion is provided separately from the auxiliary equipment cover 58, the load-transmitting wall portion is not subject to constraints from the shape of the auxiliary equipment cover 58, and freedom of design of the bracket 70 constituting the load transmission path is improved. As a result in the present exemplary embodiment, a load applied from the legs of a vehicle occupant may be transmitted toward the rear module 38 effectively.

The bracket 70 serving as the load-transmitting wall portion need not necessarily be a separate body but may be molded integrally with the auxiliary equipment cover 58, in which case a number of components may be decreased and component costs may be reduced.

As described above, in the present exemplary embodiment, the fixing face (the upper faces 66A of the bosses 66) to which the joining piece 70C of the bracket 70 is fastened is provided at the connection portion 64 of the rear module 38. Therefore, in the state in which the upper wall portion 58A of the auxiliary equipment cover 58 and the connection portion 64 of the rear module 38 are connected via the bracket 70, a load from the auxiliary equipment cover 58 may be braced by the connection portion 64 of the rear module 38 via the fixing face.

Thus, in the present exemplary embodiment, during a SOL or side impact of the vehicle 12, a load applied from the seat cushion 60 to the side thereof at which the auxiliary equipment cover 58 is disposed may be efficiently transmitted to the connection portion 64 of the rear module 38 via the bracket 70 and the fixing face (the upper faces 66A of the bosses 66).

In the present exemplary embodiment, the weld portion 72 of the joining piece 70B of the bracket 70 is provided at least at the front end portion 58A3 side of the upper wall portion 58A of the auxiliary equipment cover 58. Thus, in the present exemplary embodiment, a point at which a load applied from the seat cushion 60 is large may be reinforced, and a load applied from the legs of a vehicle occupant may be transmitted toward the rear module 38 via the bracket 70 effectively. Therefore, application of a load to the battery pack 20 may be suppressed more effectively.

In the present exemplary embodiment, the pair of the weld portion 72 and fastening portion 76 and the pair of the weld portion 74 and fastening portion 78 are disposed on respective substantially straight lines in the vehicle width direction. Therefore, a load transmission loss may be reduced in the present exemplary embodiment, and a load applied from the legs of the vehicle occupant may be transmitted through to the rear module 38 via the bracket 70 efficiently.

In the present exemplary embodiment, the lower face 60A of the seat cushion 60 abuts the upper wall portion 58A of the auxiliary equipment cover 58. Therefore, space in a luggage compartment may be greater than in a structure in which a gap is provided between the seat cushion 60 and the auxiliary equipment cover 58. Moreover, the seat cushion 60 may be lowered; that is, the seat cushion 60 may be reduced in height.

In the present exemplary embodiment, the auxiliary equipment cover 58 is formed of an iron material. Therefore in the present exemplary embodiment, propagation of electromagnetic waves from the onboard equipment 50, 54 and 56 may be suppressed.

In the present exemplary embodiment, the plate-shaped reinforcement 80 extends in the vehicle front-and-rear direction at the upper face 58A1 side of the upper wall portion 58A of the auxiliary equipment cover 58. As a result, the auxiliary equipment cover 58 is reinforced, and bending deformations of the auxiliary equipment cover 58 in the vehicle front-and-rear direction and the vehicle vertical direction may be suppressed.

### - Supplementary Descriptions of the Present Exemplary Embodiment -

In the exemplary embodiment described above, the floor portion 32 of the cabin interior 30 is described as being structured by the upper face 22B of the upper case 22. However, it will be clear that a floor panel configuring the floor portion 32 may be provided separately from the upper case 22.

In the exemplary embodiment described above, the wheel houses 40, joining portions 42 and support member 44 are described as being integrally molded by die casting, but integral molding is not necessarily required. These members may be respectively formed and then integrated by welding, fastening or the like. Although a number of components is increased in these structures, materials of the respective members may differ, fabrication methods of the members may differ, and freedom of design is improved.

In the exemplary embodiment described above, the fixing face is described as being formed by the upper faces 66A of the bosses 66 that are provided standing in the vehicle vertical direction from the inclined surface 64A provided at the connection portion 64 of the rear module 38. However, it is sufficient that the fixing face is provided at the vehicle upper side relative to the upper face 22B of the upper case 22 of the battery pack 20 and at the vehicle lower side relative to the upper face 58A1 of the upper wall portion 58A of the auxiliary equipment cover 58, and that the fixing face may enable fastening of the fastening bolts 68. Therefore, the bosses 66 are not necessarily required at the connection portion 64, but the formation of a seat for fastening of the fastening bolts 68 that is formed substantially in the vehicle horizontal directions is required.

In the present exemplary embodiment, the auxiliary equipment cover 58 is described as being formed of an iron material, but forming the auxiliary equipment cover 58 of a material that assures stiffness and blocks electromagnetic waves is sufficient. Therefore, the auxiliary equipment cover 58 is not limited to iron materials and an alternative metal may be employed.

In the present exemplary embodiment, the upper wall portion 58A of the auxiliary equipment cover 58 is described as abutting the lower face 60A of the seat cushion 60. However, as illustrated in Fig. 5, a thermal insulation member 84 may be provided between the seat cushion 60 and the auxiliary equipment cover 58. Accordingly, conduction of heat from the onboard equipment 50, 54 and 56 through to the seat cushion 60 may be suppressed.

### - Exemplary embodiments of the Present Exemplary Embodiment -

Now, exemplary embodiments of the present exemplary embodiment are described.

In the exemplary embodiment described above, as shown in Fig. 2 and Fig. 3, the bracket 70 is employed as the load-transmitting wall portion. The bracket 70 has a cross-sectional shape cut in the vehicle width direction and the vehicle vertical direction that is formed substantially in a letter-Z shape. The bracket 70 includes the main body portion 70A and the joining pieces 70B and 70C. The joining piece 70B is welded to the lower face 58A2 side of the upper wall portion 58A of the auxiliary equipment cover 58, and the joining piece 70C is fastened to the connection portion 64 of the rear module 38.

Thus, because the bracket 70 links the upper wall portion 58A of the auxiliary equipment cover 58 with the connection portion 64 of the rear module 38, when positions in the vehicle vertical direction of the upper wall portion 58A of the auxiliary equipment cover 58 and the connection portion 64 of the rear module 38 are substantially the same, the bracket 70 may be disposed substantially horizontally. Moreover, because the bracket 70 is formed to follow the shapes of the upper wall portion 58A of the auxiliary equipment cover 58 and the connection portion 64 of the rear module 38, the shape of the bracket 70 may be altered as appropriate.

For example, in the exemplary embodiment described above as illustrated in Fig. 3, the shape of the main body portion 70A of the bracket 70 is depicted as a substantially flat shape.

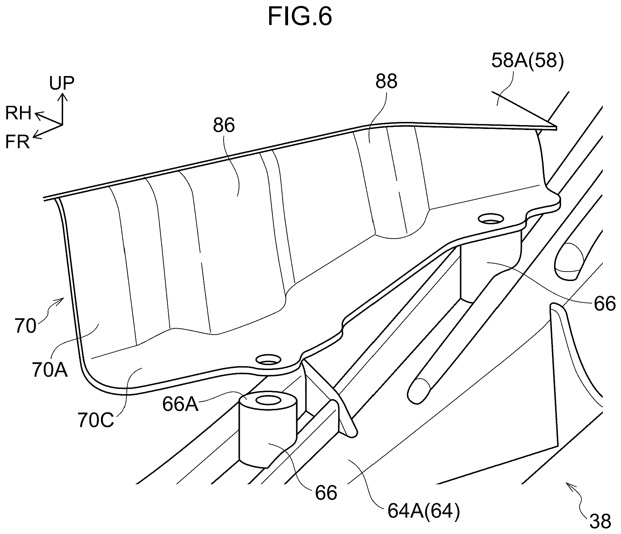

In contrast, as a first exemplary embodiment as illustrated in Fig. 6, protruding beads 86 and 88 that project to the vehicle width direction outer side may be formed in the vehicle vertical direction. Thus, stiffness of the bracket 70 itself is improved, and load transmission paths via the protruding beads 86 and 88 are constituted.

In particular, during a SOL or side impact of the vehicle 12, a load applied from the legs of a vehicle occupant due to inertia at the front end side of the seat cushion 60 (see Fig. 5) is larger than a load at the rear end side of the seat cushion 60. Accordingly, the protruding bead 86 has a larger width dimension in the vehicle front-and-rear direction than the protruding bead 88, and the protruding bead 86 has higher stiffness than the protruding bead 88.

In the exemplary embodiment described above as illustrated in Fig. 3, the weld portion 72 and fastening portion 76 and the weld portion 74 and fastening portion 78 are respectively arranged substantially on straight lines in the vehicle width direction. However, arrangements of joining portions such as welds, fastenings and the like are not limited thus.

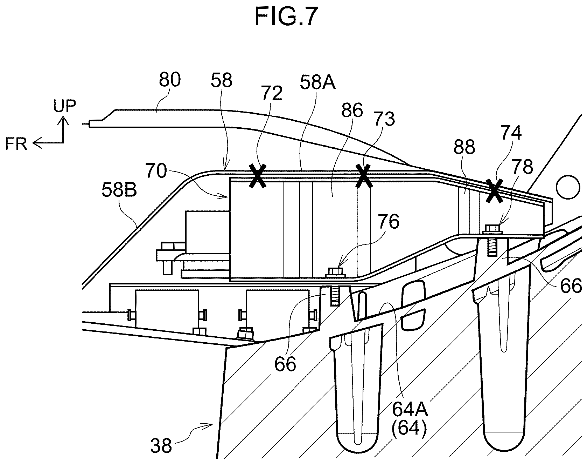

For example, as a second exemplary embodiment as illustrated in Fig. 7, positions, and also numbers, of the weld portions 72 and 74 and of the fastening portions 76 and 78 may be altered as appropriate with regard to load transmission efficiency in accordance with positional relationships with the protruding beads 86 and 88 of the bracket 70. For example, in a vehicle side view of the second exemplary embodiment, the fastening portion 76 may be disposed at a substantially central portion in the width direction of the protruding bead 86, and weld portions 72 and 73 may be provided at both sides of the fastening portion 76.

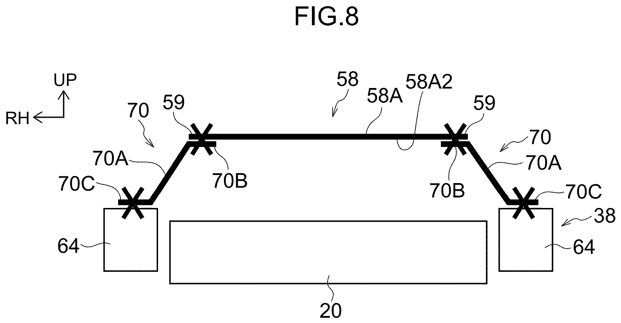

In the exemplary embodiment described above, as illustrated in Fig. 8, the cross-sectional shape of the bracket 70 is formed substantially in a letter-Z shape, the joining piece 70B of the bracket 70 is welded to the upper wall portion 58A of the auxiliary equipment cover 58, and the joining piece 70C of the bracket 70 is fastened to the connection portion 64 of the rear module 38. Fig. 8 schematically depicts the joining structures of the bracket 70 shown in Fig. 2. Joining structures of the bracket 70 are not limited thus.

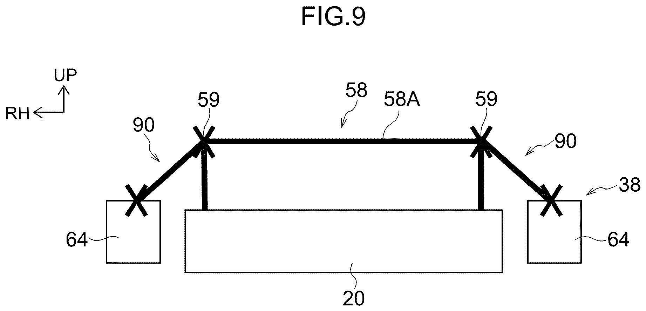

For example, as a third exemplary embodiment as illustrated in Fig. 9, a cross-sectional shape of a bracket 90 is formed in a linear shape. Two end portions of the bracket 90, which is disposed to slope to the vehicle lower side toward the vehicle width direction outer side, are welded to, respectively, the vehicle width direction side end 59 of the upper wall portion 58A of the auxiliary equipment cover 58 and the connection portion 64 of the rear module 38.

In the exemplary embodiments described above, the bracket 70 or 90 is employed as a load-transmitting wall portion that is separate from the auxiliary equipment cover 58. Therefore, each of the brackets 70 and 90 may be freely designed without being subject to constraints associated with connection to the rear module 38. In addition, materials of the auxiliary equipment cover 58 and the bracket 70 or 90 may differ.

In the exemplary embodiments described above, shapes of the brackets 70 or 90 serving as the load-transmitting wall portions are described. However, in the present exemplary embodiment, it is sufficient that a load applied to the upper wall portion 58A side of the auxiliary equipment cover 58 may be transmitted toward the connection portions 64 of the rear module 38. Therefore, the brackets 70 or 90 are not necessarily required.

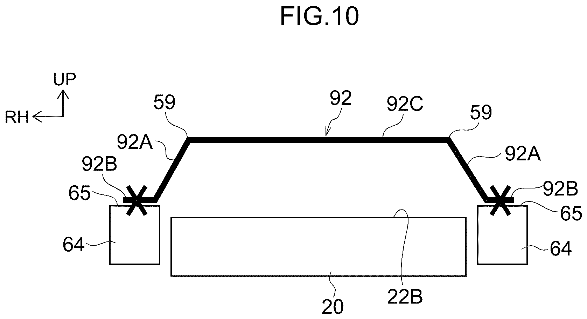

For example, as a fourth exemplary embodiment as illustrated in Fig. 10, the load-transmitting wall portion is formed by an auxiliary equipment cover 92. Side wall portions 92A of the auxiliary equipment cover 92 slope to the vehicle lower side towards the vehicle width direction outer sides, and flange portions 92B are formed at outer edges of the side wall portions 92A. Each flange portion 92B projects to the vehicle width direction outer side and may be welded or fastened to the connection portion 64 of the rear module 38.

In the exemplary embodiment described above, as shown in Fig. 10, an upper face (fixing face) 65 of each connection portion 64 of the rear module 38 is provided at the vehicle upper side relative to the upper face 22B of the battery pack 20 and at the vehicle lower side relative to an upper wall portion 92C of the auxiliary equipment cover 92.

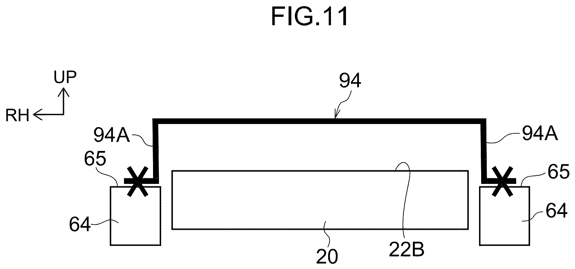

However, because it is sufficient in the present exemplary embodiment that the battery pack 20 and the rear module 38 are superposed in vehicle side view, as a fifth exemplary embodiment as illustrated in Fig. 11, the upper face 65 of each connection portion 64 of the rear module 38 may be at the vehicle lower side relative to the upper face 22B of the battery pack 20.

In this exemplary embodiment, side wall portions 94A of an auxiliary equipment cover 94 may be formed in the vehicle vertical direction. Thus, in the fifth exemplary embodiment, load transmission losses for loads transmitted toward the vehicle lower side may be lower than in the side wall portions 92A shown in Fig. 10. Because the upper face 65 of each connection portion 64 of the rear module 38 is provided at the vehicle lower side relative to the upper face 22B of the battery pack 20, load transmission efficiency is lower than in a structure in which the fixing face is provided at the vehicle upper side relative to the upper face 22B of the battery pack 20. However, the reduction in load transmission loss may counteract this disadvantage.

In the exemplary embodiment described above, respective load-transmitting wall portions connected to the rear module 38 are provided at both vehicle width direction outer sides of the upper wall portion 92C of the auxiliary equipment cover 92, such as, for example, the side wall portions 92A shown in Fig. 10, as well as the brackets 70 shown in Fig. 8.

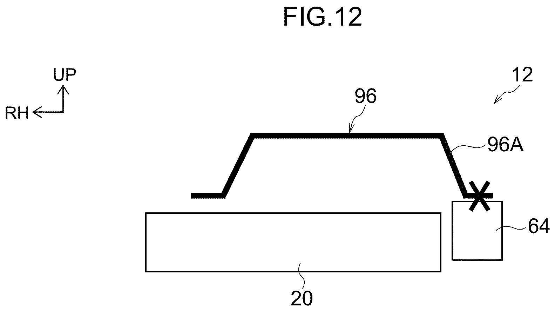

However, the load-transmitting wall portion need not necessarily be provided at both side ends 59 of the auxiliary equipment cover 92. For example, as illustrated in Fig. 12 as a sixth exemplary embodiment, a side wall portion 96A serving as the load-transmitting wall portion may be provided at an auxiliary equipment cover 96 at only one side in the vehicle width direction of the vehicle 12, depending on arrangements of onboard equipment and the like.

In the exemplary embodiment described above, as shown in Fig. 2 and Fig. 3, the plate-shaped reinforcement 80 extends in the vehicle front-and-rear direction at the upper face 58A1 side of the upper wall portion 58A of the auxiliary equipment cover 58. Thus, the auxiliary equipment cover 58 is reinforced, and bending deformations of the auxiliary equipment cover 58 in the vehicle front-and-rear direction and the vehicle vertical direction may be suppressed.

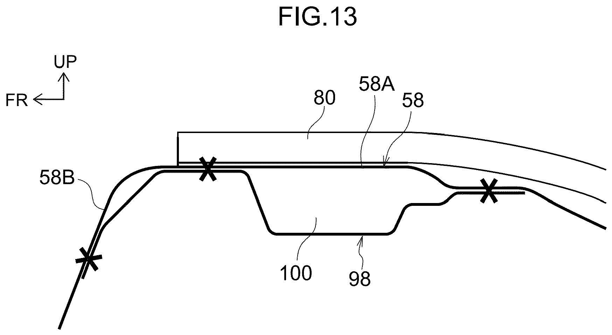

In a seventh exemplary embodiment, as illustrated in Fig. 13, a plate-shaped reinforcement (reinforcing member) 98 that extends in the vehicle width direction may be provided at the lower face 58A2 side of the upper wall portion 58A of the auxiliary equipment cover 58.

A cross-sectional shape of the reinforcement 98 cut in the vehicle front-and-rear direction and the vehicle vertical direction is formed substantially as a hat shape whose vehicle upper side is open. A chamber portion 100 is formed between the reinforcement 98 and the upper wall portion 58A of the auxiliary equipment cover 58. Thus, bending deformations of the auxiliary equipment cover 58 in the vehicle width direction and the vehicle vertical direction may be suppressed, the auxiliary equipment cover 58 is reinforced further, and the load transmission efficiency of the auxiliary equipment cover 58 is improved.

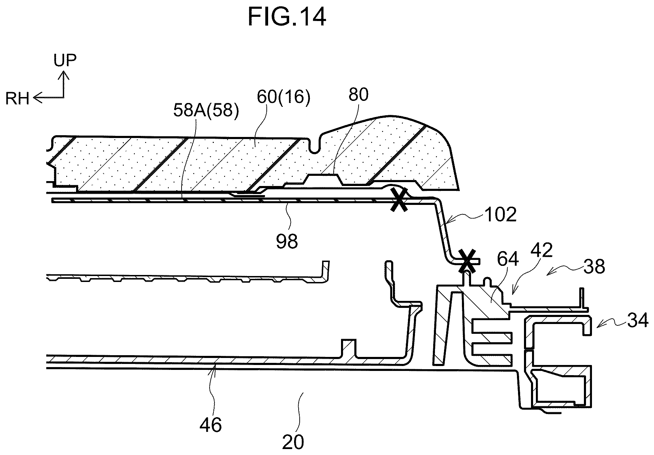

As an eighth exemplary embodiment as illustrated in Fig. 14, in addition to the structures of the seventh exemplary embodiment, a bracket 102 (a second bracket and the load-transmitting wall portion) may be connected to a vehicle width direction end portion of the reinforcement 98. The bracket 102 is connected to the connection portion 64 of the rear module 38.

As a result, a load applied to the auxiliary equipment cover 58 may be transmitted to the rear module 38 via the reinforcement 98 and the bracket 102. That is, in the present exemplary embodiment, a load transmission path may be formed by the reinforcement 98, a load applied to the auxiliary equipment cover 58 may be dispersed into both the reinforcement 98 and the bracket 70 (see Fig. 2), and transmission of the load to the battery pack 20 may be suppressed.

The reinforcement 98 may be connected to the rear module 38 via the bracket 70. That is, the bracket 70 may be joined to the upper wall portion 58A of the auxiliary equipment cover 58 and to the reinforcement 98, in which case a load transmitted from the reinforcement 98 is transmitted to the rear module 38 via the bracket 70.

In the exemplary embodiment described above, the connection portions 64 of the rear module 38 are described as being disposed at the vehicle width direction outer sides relative to the auxiliary equipment cover 58 and as being framework portions that structure frameworks of the vehicle side portions 15. However, the connection portions 64 are not limited to the rear module 38 and may be at the rockers 34 or at side members extending in the front-and-rear direction at vehicle width direction end portions that are not shown in the drawings.

It will be clear that numerous modes may be embodied within a scope that does not depart from the gist of the present disclosure. It will also be clear that the scope of the present disclosure is not to be limited to the exemplary embodiments described above.

## Claims

1. A vehicle lower portion structure (10), comprising:
a battery pack (20) disposed at a vehicle lower portion (18);
onboard equipment (50, 54, 56) disposed at a vehicle upper side of the battery pack (20);
a cover (58) that covers the onboard equipment (50, 54, 56) from a vehicle upper side, the cover (58) directly or indirectly supporting, from a vehicle lower side, a seat cushion (60) at which a vehicle occupant can be seated;
a framework portion (38, 42) disposed at a vehicle width direction outer side relative to the cover (58), the framework portion (38, 42) configuring a framework of a vehicle side portion (15); and
a load-transmitting wall portion (70, 92, 94, 96, 102) that is provided extending from a vehicle width direction outer side of an upper wall portion (58A) of the cover (58) to the framework portion (38, 42).

2. The vehicle lower portion structure (10) according to claim 1, wherein the load-transmitting wall portion (70, 92, 94, 96, 102) is connected to a connection portion (64) of the framework portion (38, 42), the connection portion (64) being provided at a vehicle upper side relative to an upper face of the battery pack (20) and at a vehicle lower side relative to an upper face (58A1) of the cover (58).

3. The vehicle lower portion structure (10) according to claim 1 or 2, wherein the seat cushion (60) abuts the upper wall portion (58A) of the cover (58).

4. The vehicle lower portion structure (10) according to any one of claims 1 to 3, wherein the load-transmitting wall portion (92, 94, 96) is molded integrally with the cover (58).

5. The vehicle lower portion structure (10) according to any one of claims 1 to 4, wherein the load-transmitting wall portion (70) is a first bracket (70), and the upper wall portion (58A) of the cover (58) is connected to the framework portion (38, 42) via the first bracket (70).

6. The vehicle lower portion structure (10) according to claim 5, wherein a position of connection (72, 74) of the first bracket (70) to the cover (58) is at a side of the first bracket (70) at which a front end portion of the seat cushion (60) is disposed.

7. The vehicle lower portion structure (10) according to claim 5 or 6, wherein a fixing face (66A) is provided at a position of connection (76, 78) of the first bracket (70) to the framework portion (38, 42), the fixing face (66A) receiving a load from the cover (58).

8. The vehicle lower portion structure (10) according to any one of claims 1 to 7, wherein a reinforcing member (98) that extends in a vehicle width direction is provided at a lower face side of the upper wall portion (58A) of the cover (58).

9. The vehicle lower portion structure (10) according to claim 8, wherein the reinforcing member (98) is connected to the framework portion (38, 42).

10. The vehicle lower portion structure (10) according to claim 9, wherein the reinforcing member (98) is connected to the framework portion (38, 42) via a second bracket (102), the second bracket (102) configuring the load-transmitting wall portion (102).

11. The vehicle lower portion structure (10) according to any one of claims 1 to 10, wherein a thermal insulation member (84) is provided between the seat cushion (60) and the cover (58).

12. The vehicle lower portion structure (10) according to any one of claims 1 to 11, wherein the cover (58) is formed of a member that blocks electromagnetic waves.
